# EUROPEAN PATENT APPLICATION

(11) **EP 1 528 518 A1**
(43) Date of publication of application: **04.05.2005**
(21) Application number: 04007644.0
(22) Date of filing: 30.03.2004
(51) Int. Cl.: G07F 19/00

(54) **Electronic-payment support system and electronic-payment support apparatus**

(30) Priority: 29.10.2003 JP 2003369133
(71) Applicant: FUJITSU LIMITED, Kawasaki-shi, Kanagawa 211-8588 (JP)
(72) Inventor:
(74) Representative: HOFFMANN - EITLE

(57) **Abstract**

The electronic payment method includes steps of registering at a website an amount informed from a salesperson terminal operated by a salesperson via the Internet, registering at the website an electronic payment method specified by a customer for the amount, when the customer accesses the website by operating a customer mobile terminal, and making an external payment system execute the electronic payment based on the electronic payment method.

## Description

### BACKGROUND OF THE INVENTION

### 1) Field of the Invention

The present invention relates to a system and an apparatus for supporting electronic payment using a credit card or the like, and more particularly, to an electronic-payment support system and an electronic-payment support apparatus, with which installation cost can be reduced and security can be improved.

### 2) Description of the Related Art

A credit card or the like (hereinafter, "a credit card") is generally used to make a payment at a store, which is called "electronic payment". To realize the electronic payment, it is necessary to install a dedicated terminal in the store. The dedicated terminal is connected to an external electronic payment system via a point of sales (POS) system or the like.

When the electronic payment is executed, a salesperson receives the credit card from a customer, reads card information using the dedicated payment terminal, and inputs a price of a product to be purchased. Then, the dedicated payment terminal accesses an electronic payment system, to request payment based on the card information and the price of the product.

A conventional electronic payment system is disclosed in, for example, Japanese Patent Application Laid-Open No. 2000-276539 and Japanese Patent Application Laid-Open No. 2001-514351 (International Publication WO 01/009807 pamphlet)

In the conventional electronic payment system, however, since the dedicated payment terminal is expensive, a cost for introducing electronic payment system to a store is considerably high. Therefore, a lot of medium- or small-sized stores take a financial burden to introduce the electronic payment system, resulting in poor spread of effective electronic payment system

Furthermore, in the conventional electronic payment, since a customer has to hand the credit card over to the salesperson, there is always a possibility that a malicious salesperson reads the card information illegally by a special device, causing a security problem.

### SUMMARY OF THE INVENTION

It is an object of the present invention to solve at least the problems in the conventional technology.

The electronic-payment support system according to one aspect of the present invention includes a salesperson terminal that determines an amount to be paid, operated by a salesperson, and an electronic-payment support apparatus including an amount registration unit that registers at a website the amount informed from the salesperson terminal, an electronic-payment method registration unit that registers at the website, when a customer accesses the website from a customer mobile terminal, an electronic-payment method specified by the customer for the amount, and an electronic payment unit that makes an external payment system execute the electronic payment based on the electronic payment method.

The electronic-payment support system according to another aspect of the present invention includes a salesperson terminal that has a mechanism to access a website, operated by a salesperson, and an electronic-payment support apparatus including an amount registration unit that registers at the website an amount to be paid and an electronic payment method informed from a customer mobile terminal operated by a customer, a notification unit that notifies the salesperson of the amount and the electronic payment method when the salesperson accesses the website by operating the salesperson terminal, and an electronic payment unit that makes an external payment system execute the electronic payment based on the electronic payment method.

The electronic-payment support system according to still another aspect of the present invention includes a salesperson terminal that has a mechanism to access a website, operated by a salesperson, and an electronic-payment support apparatus including an amount registration unit that registers at the website the amount to be paid based on a pre-registered schedule, an electronic-payment method registration unit that registers at the website, when a customer accesses the website from a customer mobile terminal, an electronic-payment method specified by the customer for the amount, a notification unit that notifies the salesperson of the amount and the electronic payment method via the salesperson terminal when the salesperson accesses the website by operating the salesperson terminal, and an electronic payment unit that makes an external payment system execute the electronic payment based on the electronic payment method.

The electronic-payment support system according to still another aspect of the present invention includes a salesperson terminal that has a mechanism to read bar code information of a product, operated by a salesperson, and an electronic-payment support apparatus including an amount registration unit that searches an amount to be paid from point-of-sales information based on the bar code information notified from the salesperson terminal, and registers the amount at a website, an electronic-payment method registration unit that registers at the website, when a customer accesses the website from a customer mobile terminal, an electronic-payment method specified by the customer for the amount, and an electronic payment unit that makes an external payment system execute the electronic payment based on the electronic payment method.

The electronic-payment support method according to still another aspect of the present invention includes registering at a website an amount informed from a salesperson terminal operated by a salesperson, registering at the website, when a customer accesses the website from a customer mobile terminal, an electronic-payment method specified by the customer for the amount, and making an external payment system execute the electronic payment based on the electronic payment method.

The electronic-payment support method according to still another aspect of the present invention includes registering at a website an amount to be paid and an electronic payment method informed from a customer mobile terminal operated by a customer, notifying a salesperson of the amount and the electronic payment method when the salesperson accesses the website by operating the salesperson terminal, and making an external payment system execute the electronic payment based on the electronic payment method.

The electronic-payment support method according to still another aspect of the present invention includes registering at the website an amount to be paid based on a pre-registered schedule, registering at the website, when a customer accesses the website from a customer mobile terminal, an electronic-payment method specified by the customer for the amount, notifying a salesperson of the amount and the electronic payment method via the salesperson terminal when the salesperson accesses the website by operating the salesperson terminal, and making an external payment system execute the electronic payment based on the electronic payment method.

The electronic-payment support method according to still another aspect of the present invention includes searching an amount to be paid from point-of-sales information based on bar code information notified from a salesperson terminal, registering the amount at a website, registering at the website, when a customer accesses the website from a customer mobile terminal, an electronic-payment method specified by the customer for the amount, and making an external payment system execute the electronic payment based on the electronic payment method.

The electronic-payment support apparatus according to still another aspect of the present invention includes an amount registration unit that registers at a website the amount informed from a salesperson terminal, an electronic-payment method registration unit that registers, when a customer accesses the website from a customer mobile terminal, an electronic-payment method specified by the customer for the amount at the website, and an electronic payment unit that makes an external payment system execute the electronic payment based on the' electronic payment method.

The electronic-payment support apparatus according to still another aspect of the present invention includes an amount registration unit that registers at a website an amount to be paid and an electronic payment method informed from a customer mobile terminal operated by a customer, a notification unit that notifies a salesperson of the amount and the electronic payment method when the salesperson accesses the website by operating the salesperson terminal, and an electronic payment unit that makes an external payment system execute the electronic payment based on the electronic payment method.

The electronic-payment support apparatus according to still another aspect of the present invention includes an amount registration unit that registers at a website an amount to be paid based on a pre-registered schedule, an electronic-payment method registration unit that registers at the website, when a customer accesses the website from a customer mobile terminal, an electronic-payment method specified by the customer for the amount, a notification unit that notifies a salesperson of the amount and the electronic payment method via a salesperson terminal when the salesperson accesses the website by operating the salesperson terminal, and an electronic payment unit that makes an external payment system execute the electronic payment based on the electronic payment method.

The computer program according to still another aspect of the present invention realizes the method according to the above aspect on a computer.

These and other objects, features and advantages of the present invention are specifically set forth in or will become apparent from the following detailed descriptions of the invention when read in conjunction with the accompanying drawings.

### BRIEF DESCRIPTION OF THE DRAWINGS

Fig. 1 is a block diagram of an electronic-payment support system and an electronic-payment support apparatus according to an embodiment of the present invention;
Fig. 2 is a sequence diagram for explaining payment processing according to the embodiment;
Fig. 3 is a sequence diagram for explaining cancellation processing according to the embodiment;
Fig. 4 is a sequence diagram for explaining payment processing according to a first modification of the embodiment;
Fig. 5 is a sequence diagram for explaining payment processing according to a second modification of the embodiment;
Fig. 6 is a sequence diagram for explaining payment processing according to a third modification of the embodiment; and
Fig. 7 is a block diagram for illustrating a configuration according to a fourth modification of the embodiment.

### DETAILED DESCRIPTION

Exemplary embodiments of the electronic-payment support system and the electronic-payment support apparatus according to the present invention are explained in detail with reference to the accompanying drawings. However, the present invention is not limited to the embodiments.

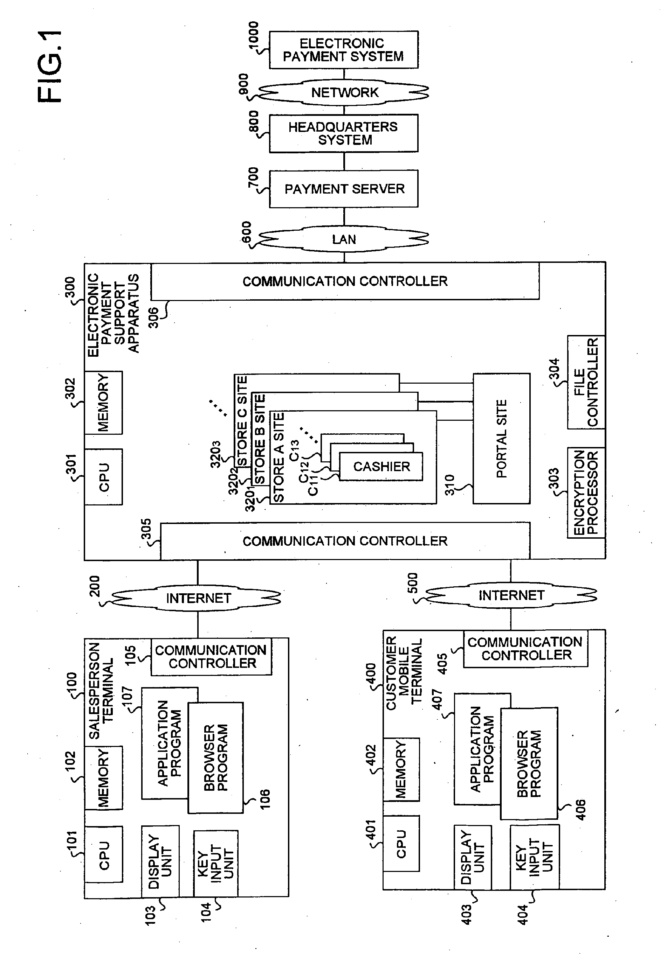

Fig. 1 is a block diagram of an electronic-payment support system and an' electronic-payment support apparatus according to an embodiment of the present invention. In the electronic-payment support illustrated, the electronic payment is performed by terminals (mobile phone, personal handyphone system (PHS) terminal, personal digital assistant (PDA), personal computer (PC), portable PC, POS terminal, etc.) that include a browser program, and can access a website on the Internet, without using a dedicated payment terminal.

The electronic-payment support system is applied to electronic payment in store sales (particularly, medium- or small size store sales), electronic payment in door-to-door sales, electronic payment of COD sales in mail orders, and electronic payment at the time of bill collection, and the like.

A salesperson terminal 100 is operated by a salesperson at the time of electronic payment using a credit card. The salesperson terminal 100 is a mobile phone, a PHS terminal, a PDA, a PC, a portable PC, a POS terminal, or the like. The salesperson is a salesperson in a store, a salesperson in the door-to-door sales, a salesperson in the COD sales, a person for collecting money, or the like. The salesperson terminal 100 accesses an electronic-payment support apparatus 300 via the Internet 200. A plurality of salesperson terminals 100 are provided for each store and each salesperson.

In the salesperson terminal 100, a central processing unit (CPU) 101 controls each section describe later. A memory 102 stores various kinds of programs (such as a browser program 106 and an application program 107) used by the CPU 101, and various kinds of data. A display section 103 is a liquid crystal display (LCD) to display various kinds of screens necessary for electronic payment. A key input section 104 is formed of ten keys, function keys, and the like.

A communication controller 105 is connected to the Internet 200 to control communication based on a predetermined communication protocol. The browser program 106 is a program for accessing the website on the Internet. For example, the website is a portal site 310 and a store A site 320₁.

The application program 107 is, for example, a program that enables a bar code input or biometrics.

The electronic-payment support apparatus 300 supports the electronic payment via the website. In the electronic-payment support apparatus 300, a CPU 301 controls each section of the apparatus. A memory 302 stores programs and data used in the CPU 301. An encryption processor 303 has a function of encrypting data handled by the electronic-payment support apparatus 300. A file controller 304 controls files handled by the electronic-payment support apparatus 300.

A communication controller 305 is connected to the Internet 200 and Internet 500 to control communication based on a predetermined communication protocol. A communication controller 306 is connected to a local area network (LAN) 600.

The portal site 310, the store A site 320₁, a store B site 320₂, a store C site 320₃ ... are websites used for registering and referring to the information necessary for the electronic payment, and are accessed by the salesperson 100 and a customer mobile terminal 400. The portal site 310 is a gateway site as an entrance.

The store A site 320₁, store B site 320₂, and store C site 320₃ ... are provided for each store (store A, store B, store C ...). In each of the store sites, a plurality of cashiers are respectively provided as a virtual store. These cashiers are associated with each salesperson, each salesroom, and each transportation route.

For example, the store A site 320₁ includes a cashier C₁₁, a cashier C₁₂, a cashier C_{13 ...}

The customer mobile terminal 400 is operated by a customer at the time of electronic payment using a credit card. The customer mobile terminal 400 is a mobile phone, a PHS terminal, a PDA, a portable PC, or the like. The customer mobile terminal 400 accesses the electronic-payment support apparatus 300 via the Internet 500.

In the customer mobile terminal 400, a CPU 401 controls each section described later. A memory 402 stores various kinds of programs (such as a browser program 406 and an application program 407) used in the CPU 401, and various kinds of data. A display section 403 is an LCD to display various kinds of screens necessary for electronic payment. A key input section 404 includes ten keys; function keys, and the like.

A communication controller 405 is connected to the Internet 500 to control communication based on a predetermined communication protocol. The browser program 406 is for accessing the website (such as the portal site 310, the store A site 3201) on the Internet.

The application program 407 is, for example, a program that enables a bar code input or biometrics.

A payment server 700 is accessed by the electronic-payment support apparatus 300 via the LAN 600, for performing various kinds of processing for the electronic payment. The payment server 700 may be provided in the electronic-payment support apparatus 300. A headquarters system 800 performs various kinds of processing for the electronic payment and core corporate processing, and is connected to an electronic payment system 1000 via a network 900.

The electronic payment system 1000 is provided in a credit card company, a banking facility, and other organizations offering the electronic payment service, and is a system for performing the electronic payment using a credit card.

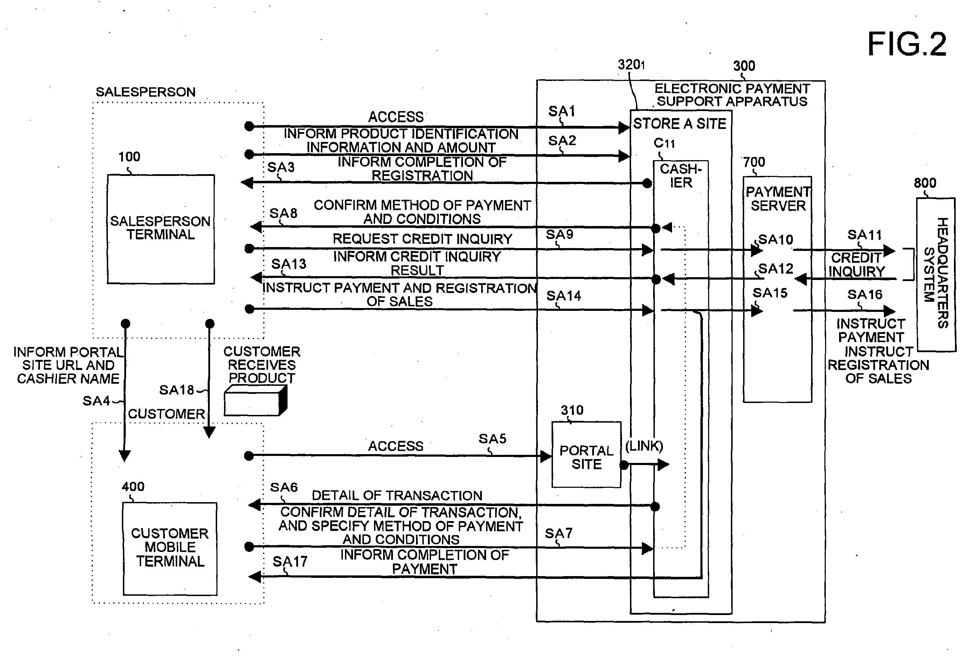

Fig. 2 is a sequence diagram for explaining payment processing according to the embodiment. The payment processing is performed when, for example, the payment for a product is electronically performed at the store A to purchase the product. When a customer hands a product to be purchased over to a checkout cashier in the store A, a salesperson operates the salesperson terminal 100 for executing the electronic payment.

At step SA1, the salesperson terminal 100 accesses the cashier C₁₁ in the store A site 320₁ in the electronic-payment support apparatus 300. At step SA2, the salesperson terminal 100 notifies the electronic-payment support apparatus 300 of product identification information (for example, yyyymmddhhmmss) for identifying the product or the price of the product input by the salesperson. The product identification information is automatically numbered.

At step SA3, the electronic-payment support apparatus 300 registers the product identification information, the price at the cashier C₁₁ and then notifies the salesperson terminal 100 of completion of registration. At step SA4, the salesperson informs the customer of a portal site uniform resource locator (URL) and the name of the cashier necessary for performing the payment.

The portal site URL is for accessing the portal site 310. The name of the cashier is the name of the cashier C₁₁. At the cashier C₁₁, the product identification information, the price, and the like relating to the product are registered at step SA2.

The customer operates the customer mobile terminal 400 to pay for the product. At step SA5, the customer mobile terminal 400 accesses the portal site 310 based on the portal site URL and the cashier name, and then accesses the cashier C₁₁ via the portal site 310.

At step SA6, the detail of the transaction (such as the product identification information and the price) is displayed on the customer mobile terminal 400. At step SA7, the customer confirms the detail of the transaction, and then specifies the method of payment (for example, the credit card) for the product and conditions (such as credit card number and expiration date) by the customer mobile terminal 400. The method of payment and conditions are registered at the cashier C₁₁.

At step SA8, the method of payment and the conditions are displayed on the salesperson terminal 100, and confirmed by the salesperson. At step SA9, the salesperson terminal 100 requests credit inquiry relating to the credit card payment to the electronic-payment support apparatus 300 based on operation of the salesperson.

At step SA10, the electronic-payment support apparatus 300 requests credit inquiry to the payment server 700. At step SA11, the payment server 700 allows the headquarters system 800 to execute the credit inquiry. The headquarters system 800 makes inquiries as to the credit by the electronic payment system 1000 (see Fig. 1), and then notifies the payment server 700 of a result of the credit inquiry (for example, availability of the credit card).

At step SA12, the payment server 700 notifies the electronic-payment support apparatus 300 of the result of the credit inquiry. At step SA13, the electronic-payment support apparatus 300 notifies the salesperson terminal 100 of the result of the credit inquiry. In this case, since the result of the credit inquiry indicates that the credit card can be used, at step SA14, the salesperson terminal 100 instructs the electronic-payment support apparatus 300 to execute payment and register the sales.

At step SA15, the electronic-payment support apparatus 300 instructs the payment server 700 to execute payment and register the sales. At step SA16, the payment server 700 instructs the headquarters system 800 to execute payment and register the sales. The headquarters system 800 requests payment for the product to the electronic payment system 1000.

At step SA17, the electronic-payment support apparatus 300 notifies the customer mobile terminal 400 of completion of payment. At step SA18, the customer receives the product from the salesperson.

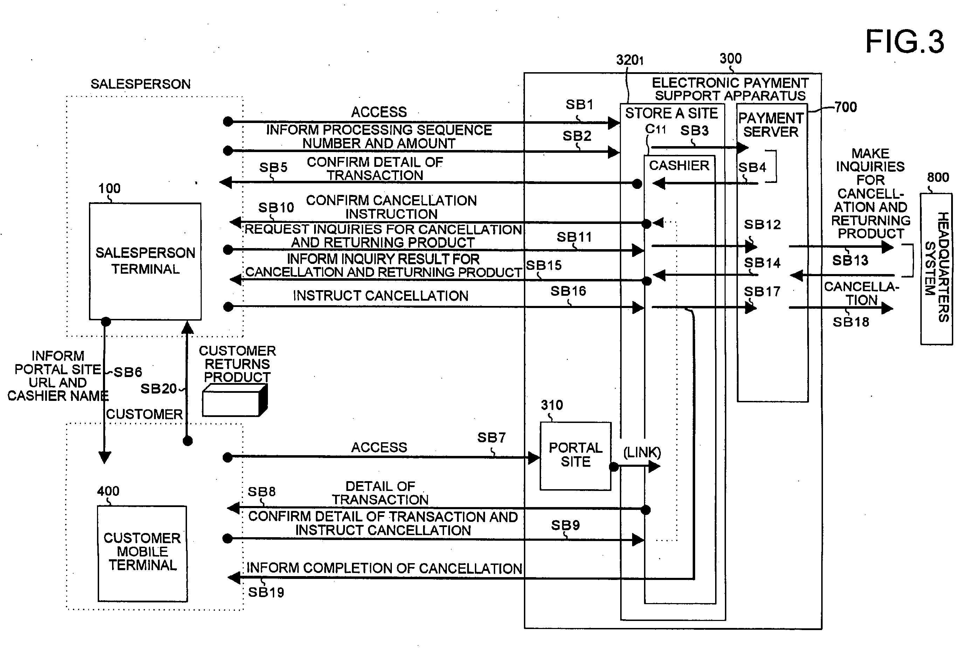

Fig. 3 is a sequence diagram for explaining cancellation processing according to the embodiment. This cancellation processing is performed when a product purchased though the payment processing is returned to cancel the payment and the sales. When the customer in the store A hands the product to be returned over to the checkout cashier with the receipt, the salesperson operates the salesperson terminal 100 for executing the cancellation processing.

At step SB1, the salesperson terminal 100 accesses, for example, the cashier C₁₁ in the store A site 320 _{1,} in the electronic-payment support apparatus 300. At step SB2, the salesperson terminal 100 notifies the electronic-payment support apparatus 300 of a processing sequence number for identifying the transaction, the price of the product, and the like input by the salesperson. The processing sequence number is controlled by the payment server 700 and the electronic-payment support apparatus 300, and is notified to the salesperson terminal 100, after the payment processing is completed (see Fig. 2).

At step SB3, the electronic-payment support apparatus 300 notifies the payment server 700 of the processing sequence number and the price. At step SB4, the payment server 700 notifies the electronic-payment support apparatus 300 of the result of confirmation of the processing sequence number and the price. At step SB5, the electronic-payment support apparatus 300 notifies the salesperson terminal 100 of the detail of the transaction (such as the product identification information and the price). The salesperson confirms the detail of the transaction (such as the product identification information and the price).

At step SB6, the salesperson informs the customer of the portal site URL and the cashier name required for cancellation.

The customer operates the customer mobile terminal 400 for performing cancellation. At step SB7, the customer mobile terminal 400 accesses the portal site 310 based on the portal site URL and the cashier name, and then the cashier C₁₁ via the portal site 310.

At step SB8, the detail of the transaction is displayed on the customer mobile terminal 400. At step SB9, after the customer confirms the detail of the transaction, the customer instructs cancellation by using the customer mobile terminal 400. The detail of cancellation is registered with the cashier C₁₁.

At step SB10, the detail of cancellation is displayed on the salesperson terminal 100, so that the salesperson confirms the detail of the cancellation instruction. At step SB11, the salesperson requests the electronic-payment support apparatus 300 to make inquiries for cancellation and returning product for canceling the payment and the sales, by operating the salesperson terminal 100.

At step SB12, the electronic-payment support apparatus 300 requests the payment server 700 to make inquiries for cancellation and returning product. At step SB13, the payment server 700 allows the headquarters system 800 to execute inquiries for cancellation and returning product. After having made inquiries for cancellation and returning product to the electronic payment system 1000 (see Fig. 1), the headquarters system 800 notifies the payment server 700 of the result of inquiries (for example, cancellation and returning product is possible).

At step SB14, the payment server 700 notifies the electronic-payment support apparatus 300 of the result of inquiries. At step SB15, the electronic-payment support apparatus 300 notifies the salesperson terminal 100 of the result of inquiries. In this case, since the result of inquiries indicates that cancellation and returning product are possible, at step SB16, the salesperson terminal 100 instructs cancellation to the electronic-payment support apparatus 300.

At step SB17, the electronic-payment support apparatus 300 instructs cancellation to the payment server 700. At step SB18, the payment server 700 instructs cancellation to the headquarters system 800, and cancels the sales of the product. The headquarters system 800 requests cancellation of the payment for the product to the electronic payment system 1000.

At step SB19, the electronic-payment support apparatus 300 notifies the customer mobile terminal 400 of completion of cancellation. At step SB20, the customer returns the product to the salesperson.

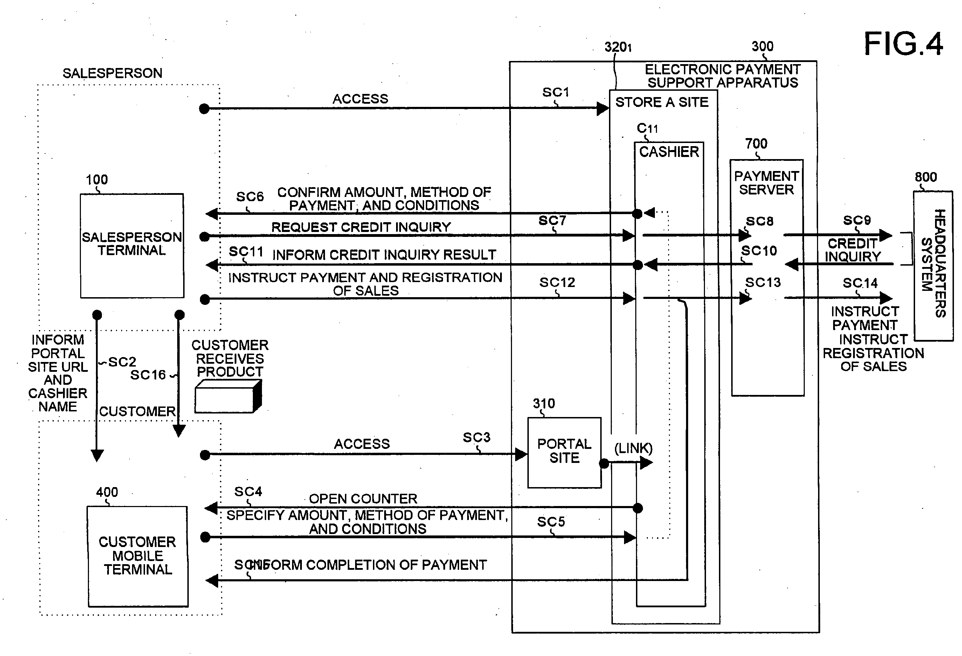

In the present embodiment, a configuration example in which the salesperson inputs the price at step SA2 illustrated in Fig. 2 is explained. However, instead of the salesperson, the customer may input the price. This configuration example will be explained below with reference to Fig. 4, as a first modification of the embodiment.

Fig. 4 is a sequence diagram for explaining payment processing according to the first modification of the embodiment. The payment processing is performed when, for example, the payment for the product is electronically paid in the door-to-door sales, to purchase the product. In the first modified example, for example, each cashier corresponds to each salesperson. The salesperson operates the salesperson terminal 100 for executing the payment processing relating to the product, at the house where the salesperson visits.

At step SC1, the salesperson terminal 100 accesses the cashier C₁₁ in the store A site 320₁ in the electronic-payment support apparatus 300. At step SC2, the salesperson notifies the customer of the portal site URL and the cashier name required for payment.

The customer operates the customer mobile terminal 400 for payment for the product. At step SC3, the customer mobile terminal 400 accesses the portal site 310 based on the portal site URL and the cashier name, and then the cashier C₁₁ via the portal site 310.

At step SC4, the customer mobile terminal 400 opens the cashier C11. At step SC5, the customer specifies the price of the product, the payment method (such as the credit card), and the conditions (such as credit card number, expiration date), by operating the customer mobile terminal 400. The price, the payment method, and the conditions are registered at the cashier C₁₁.

At step SC6, the price, the payment method, and the conditions are displayed on the salesperson terminal 100, and confirmed by the salesperson. At step SC7, the salesperson requests credit inquiry relating to the credit card payment to the electronic-payment support apparatus 300 by operating the salesperson terminal 100.

At step SC8, the electronic-payment support apparatus 300 requests credit inquiry to the payment server 700. At step SC9, the payment server 700 allows the headquarters system 800 to execute the credit inquiry. The headquarters system 800 makes inquiries as to the credit by the electronic payment system 1000 (see Fig. 1), and then notifies the payment server 700 of a result of the credit inquiry (for example, availability of the credit card).

At step SC10, the payment server 700 notifies the electronic-payment support apparatus 300 of the result of the credit inquiry. At step SC11, the electronic-payment support apparatus 300 notifies the salesperson terminal 100 of the result of the credit inquiry. In this case, since the result of the credit inquiry indicates that the credit card can be used, at step SC12, the salesperson terminal 100 instructs the electronic-payment support apparatus 300 to execute payment and register the sales.

At step SC13, the electronic-payment support apparatus 300 instructs the payment server 700 to execute payment and register the sales. At step SC14, the payment server 700 instructs the headquarters system 800 to execute payment and register the sales. The headquarters system 800 requests payment relating to the product to the electronic payment system 1000.

At step SC15, the electronic-payment support apparatus 300 notifies the customer mobile terminal 400 of completion of payment. At step SC16, the customer receives the product from the salesperson.

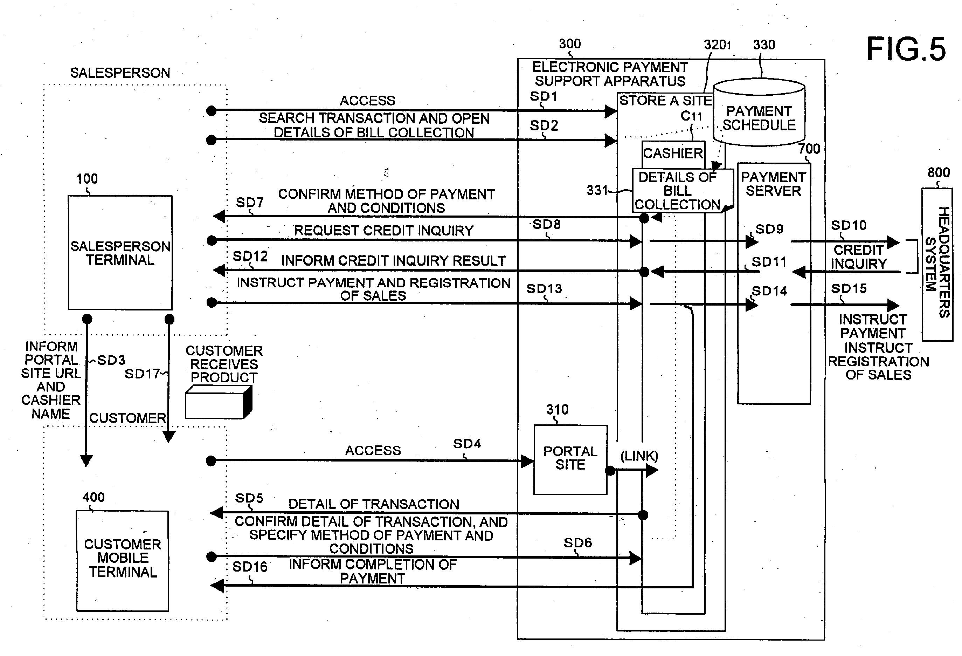

In the present embodiment, a configuration example in which electronic payment is mainly performed at stores is explained.
However, a configuration example may be such that when electronic payment is performed by COD in a mail order or by bill collection, the electronic payment is performed by simple input based on a previously registered payment schedule. This configuration example will be explained below with reference to Fig. 5, as a second modification of the embodiment.

Fig. 5 is a sequence diagram for explaining payment processing according to the second modification of the embodiment. This payment processing is performed when the payment for the product is electronically paid by bill collection or by COD in a mail order. The payment schedule 330 is registered beforehand with the electronic-payment support apparatus 300. In the payment schedule 330, details of bill collection 331 including customers from whom money is to be collected (including COD sales), the products, the prices, the date and time to be collected, and the like are controlled.

At the house of the customer from whom the money is to be collected, the salesperson operates the salesperson terminal 100 for executing the payment processing. At step SD1, the salesperson terminal 100 accesses the cashier C₁₁ in the store A site 320₁ in the electronic-payment support apparatus 300. At step SD2, the salesperson terminal 100 executes transaction search, to open the details of bill collection 331 corresponding to the transaction from the payment schedule 330.

At step SD3, the salesperson informs the customer of the portal site URL and the cashier name required for payment.

The customer operates the customer mobile terminal 400 to pay for the product. At step SD4, the customer mobile terminal 400 accesses the portal site 310 based on the portal site URL and the cashier name, and then the cashier C₁₁ via the portal site 310.

At step SD5, the detail of the transaction (such as the product and the price) corresponding to the details of bill collection 331 is displayed on the customer mobile terminal 400. At step SD6, the customer confirms the detail of the transaction, and then specifies the method of payment (for example, a credit card) for the product and conditions (such as credit card number and expiration date) by operating the customer mobile terminal 400. The method of payment and conditions are registered with the cashier C₁₁.

At step SD7, the method of payment and the conditions are displayed on the salesperson terminal 100, and confirmed by the salesperson. At step SD8, the salesperson requests credit inquiry relating to the credit card payment to the electronic-payment support apparatus 300 by operating the salesperson terminal 100.

At step SD9, the electronic-payment support apparatus 300 requests credit inquiry to the payment server 700. At step SD10, the payment server 700 allows the headquarters system 800 to execute the credit inquiry. The headquarters system 800 makes inquiries as to the credit by the electronic payment system 1000 (see Fig. 1), and then notifies the payment server 700 of a result of the credit inquiry (for example, availability of the credit card).

At step SD11, the payment server 700 notifies the electronic-payment support apparatus 300 of the result of the credit inquiry. At step SD12, the electronic-payment support apparatus 300 notifies the salesperson terminal 100 of the result of the credit inquiry. In this case, since the result of the credit inquiry indicates that the credit card can be used, at step SD13, the salesperson terminal 100 instructs the electronic-payment support apparatus 300 to execute payment and register the sales.

At step SD14, the electronic-payment support apparatus 300 instructs the payment server 700 to execute payment and register the sales. At step SD15, the payment server 700 instructs the headquarters system 800 to execute payment and register the sales. The headquarters system 800 requests payment for the product to the electronic payment system 1000.

At step SD16, the electronic-payment support apparatus 300 notifies the customer mobile terminal 400 of completion of payment. At step SD17, the customer receives the product from the salesperson.

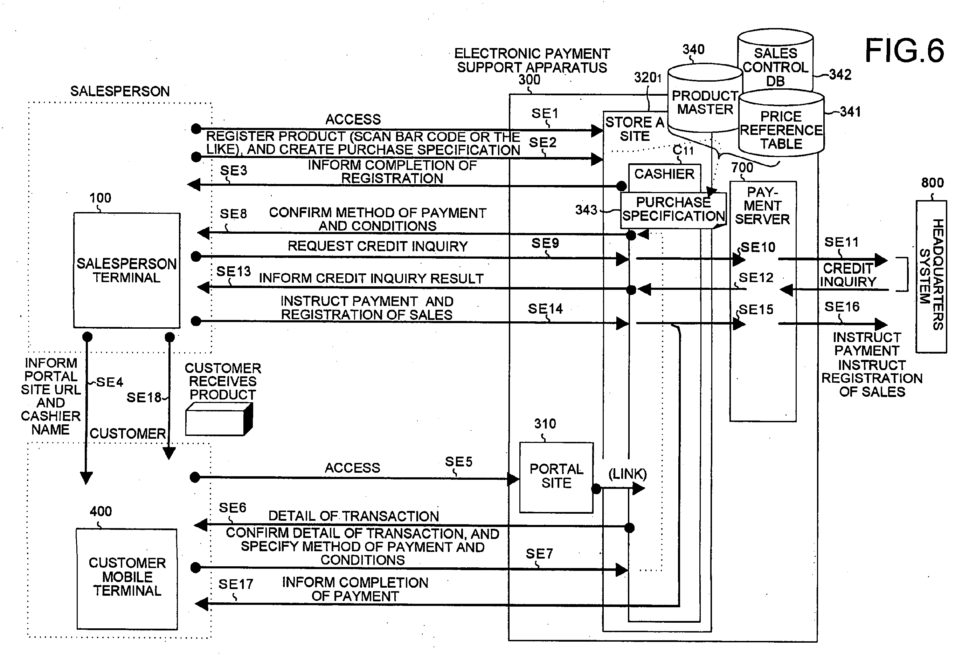

In the present embodiment, the POS function is not particularly mentioned, but the electronic-payment support apparatus 300 may have the POS function. This configuration example will be explained below with reference to Fig. 6, as a third modification of the embodiment.

Fig. 6 is a sequence diagram for explaining payment processing according to the third modification of the embodiment. This payment processing is processing when the payment for the product is electronically performed at the store A to purchase the product. In the third modification, the electronic-payment support apparatus 300 is provided with a product master 340, a price reference table 341, and sales control database (DB) 342 (generically, POS information database), for realizing the POS function. The salesperson terminal 100 is connected with a bar code reader (not shown).

Products with bar codes are controlled in the product master 340. The prices of products are controlled in the price reference table 341. The sales at the store are controlled in the sales control DB 342.

When a customer hands the product to be purchased over to the checkout cashier at store A, the salesperson operates the salesperson terminal 100 for executing the payment processing.

At step SE1, the salesperson terminal 100 accesses the cashier C₁₁ in the store A site 320₁ in the electronic-payment support apparatus 300. At step SE2, the bar coded product is scanned by the bar code reader (not illustrated) according to the operation of the salesperson, to perform product registration.

In other words, the salesperson terminal 100 notifies the electronic-payment support apparatus 300 of the bar code information. The electronic-payment support apparatus 300 refers to the product master 340 and the price reference table 341, using the bar code information as the key, to create a purchase specification 343 including the product, and the price (hereinafter, "amount").

At step SE3, the electronic-payment support apparatus 300 registers the product, the amount, and the like in the purchase specification 343 at the cashier C₁₁, and informs the salesperson terminal 100 of completion of registration. At step SE4, the salesperson informs the customer of the portal site URL and the cashier name required for payment.

In the cashier C₁₁, the product, the amount, and the like relating to the relevant product are registered at step SE2.

The customer operates the customer mobile terminal 400 to pay for the product. At step SE5, the customer mobile terminal 400 accesses the portal site 310 based on the portal site URL and the cashier name, and then the cashier C₁₁ via the portal site 310.

At step SE6, the detail of the transaction (such as the product and the amount) is displayed on the customer mobile terminal 400. At step SE7, the customer confirms the detail of the transaction, and then specifies the method of payment (for example, a credit card) of the product and conditions (such as credit card number and expiration date) by operating the customer mobile terminal 400. The method of payment and conditions are registered with the cashier C₁₁.

At step SE8, the method of payment and the conditions are displayed on the salesperson terminal 100, and confirmed by the salesperson. At step SE9, the salesperson requests credit inquiry relating to the credit card payment to the electronic-payment support apparatus 300 by operating the salesperson terminal 100.

At step SE10, the electronic-payment support apparatus 300 requests credit inquiry to the payment server 700. At step SE11, the payment server 700 allows the headquarters system 800 to execute the credit inquiry. The headquarters system 800 makes inquiries as to the credit by the electronic payment system 1000 (see Fig. 1), and then notifies the payment server 700 of a result of the credit inquiry (for example, availability of the credit card).

At step SE12, the payment server 700 notifies the electronic-payment support apparatus 300 of the result of the credit inquiry. At step SE13, the electronic-payment support apparatus 300 notifies the salesperson terminal 100 of the result of the credit inquiry. In this case, since the result of the credit inquiry indicates that the credit card can be used, at step SE14, the salesperson terminal 100 instructs the electronic-payment support apparatus 300 to execute payment and register the sales.

At step SE15, the electronic-payment support apparatus 300 registers the sales at the sales DB 342, and instructs the payment server 700 to execute payment and register the sales. At step SE16, the payment server 700 instructs the headquarters system 800 to execute payment and register the sales. The headquarters system 800 requests payment for the product to the electronic payment system 1000.

At step SE17, the electronic-payment support apparatus 300 notifies the customer mobile terminal 400 of completion of payment. At step SE18, the customer receives the product from the salesperson.

In the present embodiment, the customer mobile terminal 400 may be provided with the bar code reader, to read the bar code expressing the portal site URL and the cashier name by the bar code reader. The customer mobile terminal 400 may access the portal site 310 and the cashier, to save the time and labor for input.

In the present embodiment, the salesperson terminal 100 and the customer mobile terminal 400 may be provided with a biological information reader that reads biological information (for example, fingerprint), so that at the time of accessing the electronic-payment support apparatus 300, the authentication may be performed by the biological information read by the biological information reader, instead of the conventional authentication by the input of the ID and the password.

In the present embodiment, the configuration example in which the credit card number and the expiration date are input by the customer mobile terminal 400 is explained. However, the configuration may be such that an application program, by which the credit card number and the expiration date can be confirmed by the electronic payment system 1000 only by inputting the ID and the password (also possible by the biological information), is incorporated in the customer mobile terminal 400.

Further, the embodiment can be applied to various reservation services, such as a reservation and ticketing service for making a reservation and ticketing, an administrative service for making a reservation for facilities or book lending in libraries, and a reservation service for health care (such as medical checkup), and corporate services.

According to the embodiment, as explained with reference to Fig. 2, the amount informed from the salesperson terminal 100 operated by the salesperson is registered at the store A site 320₁ (cashier C₁₁), and when the customer accesses the store A site 320₁ (cashier C₁₁) by operating the customer mobile terminal 400, the customer specifies the electronic payment method (such as credit card number and expiration date) for the amount, and registers the method at the store A site 320₁ (cashier C₁₁), so that the electronic payment is executed by the external payment system (such as electronic payment system 1000), based on the electronic payment method. As a result, a dedicated payment terminal is not required, enabling reduction in the introduction cost of the electronic payment.

According to the first modification of the embodiment, as explained with reference to Fig. 4, the amount and the electronic payment method informed from the customer mobile terminal 400 operated by the customer is registered with the store A site 320₁ (cashier C₁₁), and when the salesperson accesses the store A site 320₁ (cashier C₁₁) by operating the salesperson terminal 100, the amount and the electronic payment method are notified to the salesperson, and based on the electronic payment method, the electronic payment is executed by the external payment system (such as electronic payment system 1000). As a result, a dedicated payment terminal is not required, enabling reduction in the introduction cost of the electronic payment.

According to the second modification of the embodiment, as explained with reference to Fig. 5, the amount to be paid is registered with the store A site 320₁ (cashier C₁₁), based on the payment schedule 330 registered beforehand. When the customer accesses the store A site 320₁ (cashier C₁₁) by operating the customer mobile terminal 400, the customer specifies the electronic payment method relating to the amount, and registers the method at the store A site 320₁ (cashier C₁₁). When the salesperson accesses the store A site 320₁ (cashier C₁₁) by operating the salesperson terminal 100, the amount and the electronic payment method are notified to the salesperson, so that based on the electronic payment method, electronic payment is executed by the external payment system (such as electronic payment system 1000). As a result, the introduction cost of the electronic payment at the time of bill collection in the schedule or a COD sale in the mail order can be reduced.

According to the third modification of the embodiment, as explained with reference to Fig. 6, the amount is searched from the POS information such as the product master 340 and the price reference table 341, based on the bar code information of the product informed from the salesperson terminal 100 operated by the salesperson, and the amount is registered at the store A site 320₁ (cashier C₁₁). When the customer accesses the store A site 320₁ (cashier C₁₁) by operating the customer mobile terminal 400, the customer specifies the electronic payment method relating to the amount and registers the method with the store A site 320₁ (cashier C₁₁), so that the electronic payment is executed by the external payment system based on the electronic payment method. As a result, a dedicated payment terminal is not required, enabling reduction in the introduction cost of the electronic payment.

According to the present embodiment, since the electronic payment method is a method relating to credit card payment, the customer is not required to hand the credit card over to the salesperson as required conventionally, and hence the security can be improved.

The embodiment according to the present invention has been explained in detail with reference to the drawings, but the specific configuration example is not limited to the embodiment, and design changes and the like without departing from the scope of the present invention are included in the present invention.

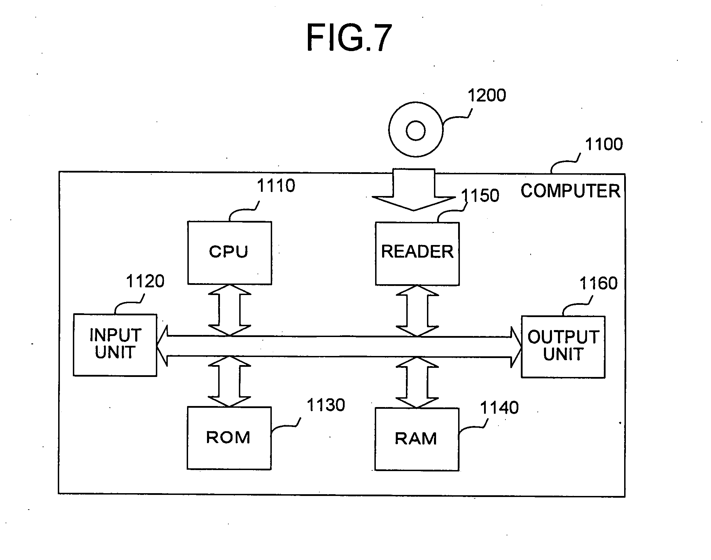

For example, according to a fourth modification of the embodiment, a program for realizing the function of the electronic-payment support apparatus 300 illustrated in Fig. 1 to Fig. 6 is recorded in a computer readable recording medium 1200 illustrated in Fig. 7. The program recorded in the recording medium 1200 may be read by a computer 1100 illustrated in this figure and executed by realize the respective functions.

The computer 1100 includes a CPU 1110 that executes the program, an input unit 1120 such as a keyboard and a mouse, a read only memory (ROM) 1130 that stores various data, a random access memory (RAM) 1140 that stores operation parameters and the like, a reader 1150 that reads the program from the recording medium 1200, and an output unit 1160 such as a display and a printer.

The CPU 1110 reads the program recorded in the recording medium 1200 via the reader 1150, and executes the program, realizing the functions. Examples of the recording medium 1200 include an optical disk, a flexible disk, and a hard disk.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. An electronic-payment support system comprising:
a salesperson terminal that determines an amount to be paid operated by a salesperson; and
an electronic-payment support apparatus including
an amount registration unit that registers at a website the amount informed from the salesperson terminal;
an electronic-payment method registration unit that registers at the website, when a customer accesses the website from a customer mobile terminal, an electronic-payment method specified by the customer for the amount; and
an electronic payment unit that makes an external payment system execute the electronic payment based on the electronic payment method.

2. The electronic-payment support system according to claim 1, wherein a virtual store is provided at the website, as an accessing destination and a registration destination, corresponding to each salesperson.

3. An electronic-payment support system comprising:
a salesperson terminal that has a mechanism to access a website operated by a salesperson; and
an electronic-payment support apparatus including
an amount registration unit that registers at the website an amount to be paid and an electronic payment method informed from a customer mobile terminal operated by a customer;
a notification unit that notifies the salesperson of the amount and the electronic payment method when the salesperson accesses the website by operating the salesperson terminal; and
an electronic payment unit that makes an external payment system execute the electronic payment based on the electronic payment method.

4. The electronic-payment support system according to claim 3, wherein a virtual store is provided at the website, as an accessing destination and a registration destination, corresponding to each salesperson.

5. An electronic-payment support system comprising:
a salesperson terminal that has a mechanism to access a website operated by a salesperson; and
an electronic-payment support apparatus including
an amount registration unit that registers at the website the amount to be paid based on a pre-registered schedule;
an electronic-payment method registration unit that registers at the website, when a customer accesses the website from a customer mobile terminal, an electronic-payment method specified by the customer for the amount;
a notification unit that notifies the salesperson of the amount and the electronic payment method via the salesperson terminal when the salesperson accesses the website by operating the salesperson terminal; and
an electronic payment unit that makes an external payment system execute the electronic payment based on the electronic payment method.

6. The electronic-payment support system according to claim 5, wherein a virtual store is provided at the website, as an accessing destination and a registration destination, corresponding to each salesperson.

7. An electronic-payment support system comprising:
a salesperson terminal that has a mechanism to read bar code information of a product operated by a salesperson; and
an electronic-payment support apparatus including
an amount registration unit that searches from point-of-sales information an amount to be paid based on the bar code information notified from the salesperson terminal, and registers the amount at a website;
an electronic-payment method registration unit that registers at the website, when a customer accesses the website from a customer mobile terminal, an electronic-payment method specified by the customer for the amount; and
an electronic payment unit that makes an external payment system execute the electronic payment based on the electronic payment method.

8. The electronic-payment support system according to claim 7, wherein a virtual store is provided at the website, as an accessing destination and a registration destination, corresponding to each salesperson.

9. An electronic-payment support method comprising:
registering at a website an amount informed from a salesperson terminal that is operated by a salesperson;
registering at the website, when a customer accesses the website from a customer mobile terminal, an electronic-payment method specified by the customer for the amount; and
making an external payment system execute the electronic payment based on the electronic payment method.

10. The electronic-payment support system according to claim 9, wherein a virtual store is provided at the website, as an accessing destination and a registration destination, corresponding to each salesperson.

11. An electronic-payment support method comprising:
registering at a website an amount to be paid and an electronic payment method informed from a customer mobile terminal that is operated by a customer;
notifying a salesperson of the amount and the electronic payment method when the salesperson accesses the website by operating the salesperson terminal; and
making an external payment system execute the electronic payment based on the electronic payment method.

12. The electronic-payment support system according to claim 11, wherein a virtual store is provided at the website, as an accessing destination and a registration destination, corresponding to each salesperson.

13. An electronic-payment support method comprising:
registering at the website an amount to be paid based on a pre-registered schedule;
registering at the website, when a customer accesses the website from a customer mobile terminal, an electronic-payment method specified by the customer for the amount;
notifying a salesperson of the amount and the electronic payment method via a salesperson terminal when the salesperson accesses the website by operating the salesperson terminal; and
making an external payment system execute the electronic payment based on the electronic payment method.

14. The electronic-payment support system according to claim 13, wherein a virtual store is provided at the website, as an accessing destination and a registration destination, corresponding to each salesperson.

15. An electronic-payment support method comprising:
searching from point-of-sales information an amount to be paid based on bar code information notified from a salesperson terminal;
registering the amount at a website;
registering at the website, when a customer accesses the website from a customer mobile terminal, an electronic-payment method specified by the customer for the amount; and
making an external payment system execute the electronic payment based on the electronic payment method.

16. The electronic-payment support system according to claim 15, wherein a virtual store is provided at the website, as an accessing destination and a registration destination, corresponding to each salesperson.

17. An electronic-payment support apparatus comprising:
an amount registration unit that registers at a website the amount informed from a salesperson terminal that is operated by a salesperson;
an electronic-payment method registration unit that registers at the website, when a customer accesses the website from a customer mobile terminal, an electronic-payment method specified by the customer for the amount; and
an electronic payment unit that makes an external payment system execute the electronic payment based on the electronic payment method.

18. An electronic-payment support apparatus comprising:
an amount registration unit that registers at a website an amount to be paid and an electronic payment method informed from a customer mobile terminal that is operated by a customer;
a notification unit that notifies a salesperson of the amount and the electronic payment method when the salesperson accesses the website by operating the salesperson terminal; and
an electronic payment unit that makes an external payment system execute the electronic payment based on the electronic payment method.

19. An electronic-payment support apparatus comprising:
an amount registration unit that registers at a website an amount to be paid based on a pre-registered schedule;
an electronic-payment method registration unit that registers at the website, when a customer accesses the website from a customer mobile terminal, an electronic-payment method specified by the customer for the amount;
a notification unit that notifies a salesperson of the amount and the electronic payment method via a salesperson terminal when the salesperson accesses the website by operating the salesperson terminal; and
an electronic payment unit that makes an external payment system execute the electronic payment based on the electronic payment method.

20. A computer program for supporting an electronic payment, making a computer execute:
registering at a website an amount informed from a salesperson terminal that is operated by a salesperson;
registering at the website, when a customer accesses the website from a customer mobile terminal, an electronic-payment method specified by the customer for the amount; and
making an external payment system execute the electronic payment based on the electronic payment method.
